# EUROPÄISCHE PATENTSCHRIFT

(11) **EP 1 871 664 B1**
(45) Veröffentlichungstag und Bekanntmachung des Hinweises auf die Patenterteilung: **15.12.2010**
(21) Anmeldenummer: 06723485.6
(22) Anmeldetag: 17.03.2006
(51) Int. Cl.: B64D 11/06

(54) **PASSAGIERSITZ, INSBESONDERE FLUGGASTSITZ**
PASSENGER SEAT, ESPECIALLY AIRLINE PASSENGER SEAT
SIEGE DE PASSAGER, NOTAMMENT SIEGE DE PASSAGER AERIEN

(30) Priorität: 19.04.2005 DE 102005017879
(43) Veröffentlichungstag der Anmeldung: 02.01.2008
(73) Patentinhaber: Recaro Aircraft Seating GmbH & Co. KG, 74523 Schwäbisch Hall (DE)
(72) Erfinder: STRASSER, Ulrich, 86156 Augsburg (DE); SCHÜRG, Hartmut, 74523 Schwäbisch Hall (DE)
(74) Vertreter: Daub, Thomas
(86) Internationale Anmeldenummer: PCT/EP2006/002441
(87) Internationale Veröffentlichungsnummer: WO 2006/111227

(56) Entgegenhaltungen:
- EP-A- 0 773 134
- EP-A- 1 236 642
- DE-A1- 10 132 282
- US-A- 6 113 183
- US-A1- 2003 085 597
- US-A1- 2004 004 382

## Beschreibung

Die Erfindung bezieht sich auf einen Passagiersitz, insbesondere Fluggastsitz, mit Sitzkomponenten wie Sitzteil, Rückenlehne und Armlehne, von denen zumindest eine Komponente zur Lageeinstellung relativ zu anderen Sitzkomponenten bewegbar angeordnet ist, und mit einer Trennwand, die zwischen einer Gebrauchsstellung, in der sie sich in einem seitlichen Abschirmbereich des Sitzes erstreckt, und einer Nicht-Gebrauchsstellung überführbar ist, in der sie den Abschirmbereich freigibt.

Passagiersitze dieser Art sind bekannt, vgl. DE 101 32 282 A1. Bei Verkehrsmitteln, wie Verkehrsflugzeuge mit Sitzreihen, wo mehrere Sitze nebeneinander angeordnet sind, wird angestrebt, den nebeneinander sitzenden Passagieren ein möglichst hohes Maß an Privatsphäre zur Verfügung zu stellen. Die Möglichkeit, zwischen zwei nebeneinander liegenden Sitzen mittels einer in ihre Gebrauchsstellung überführten Trennwand eine Abschirmung zu bilden, kommt diesem Bestreben entgegen, insbesondere, wenn eine großflächige Trennwand einen entsprechend großflächigen Abschirmbereich überdeckt. Bei Passagiersitzen für Verkehrsmittel, insbesondere bei Fluggastsitzen, ist dieses Ziel aufgrund baulicher Gegebenheiten jedoch schwer zu erreichen. Die Trennwand ist bei solchen Sitzen in der Nicht-Gebrauchsstellung in einer einer zugeordneten Armlehne zugehörigen, seitlichen Sitzkonsole versenkt, aus der sie beim Überführen in die Gebrauchsstellung ausgefahren wird. Da innerhalb solcher Sitzkonsolen mechanische und/oder elektrische Sitz-Zusatzsysteme unterzubringen sind, steht innerhalb der Konsole für die Trennwand lediglich ein beschränkter Stauraum zur Verfügung, was eine ausreichend großflächige Dimensionierung der Trennwand verhindert.

Aus der US-Anmeldung US 2003/0085597 A1 ist ein Fahrzeugsitz bekannt, der zu beiden Seiten jeweils eine Trennwand aufweist. Jede Trennwand besteht aus mehreren Wandelementen, die bei einer Überführung von einer Nicht-Gebrauchsstellung in eine Gebrauchsstellung der Trennwand teleskopartig ausgefahren werden, wobei durch eine Bewegung eines Wandelements ein weiteres Wandelement mitgenommen und die gesamte Trennwand errichtet werden kann.

Das europäische Patent EP 0 773 134 A3 offenbart einen Fluggastsitz mit einer Trennwand, die in einer Nicht-Gebrauchsstellung in einer Kammer einer Armlehne angeordnet ist. Die Trennwand weist mehrere, aus einem faltbaren oder aufrollbaren Material bestehende Wandelemente auf, die durch bewegliche Stäbe miteinander gekoppelt sind. Eine Überführung der Trennwand von einer Nicht-Gebrauchsstellung in eine Gebrauchsstellung kann erfolgen, indem ein Benutzer einen obersten, in der Armlehne liegenden Stab erfasst und nach hinten schwenkt.

Ausgehend von diesem Stand der Technik stellt sich die Erfindung die Aufgabe, einen Passagiersitz, insbesondere Fluggastsitz, zu schaffen, der trotz eingeschränkten Stauraumes, der für die Unterbringung der Trennwand in der Nicht-Gebrauchsstellung zur Verfügung steht, die Möglichkeiten einer großflächigen Dimensionierung der Trennwand sowie einer besonders einfachen Bedienung derselben bietet.

Erfindungsgemäß ist diese Aufgabe durch einen Passagiersitz gelöst, der die Merkmale des Patentanspruches 1 in seiner Gesamtheit aufweist.

Durch die erfindungsgemäß (siehe kennzeichnenden Teil des Anspruches 1) vorgesehene schwenkbare Lagerung eines ersten Wandteils, der durch eine Schwenkbewegung einer mit ihm verbundenen, lageeinstellbaren Armlehne schwenkbar ist und über eine Führungseinrichtung mit zumindest einem zweiten schwenkbaren Wandteil zusammenwirkt, ist eine besonders einfach bedienbare Lösung bereitgestellt, weil einfaches Schwenken, d. h. Hochklappen der Armlehne aus der normalen Gebrauchslage, die Trennwand in die Gebrauchsstellung überführt. Die schwenkbare Lagerung beider Wandteile führt auch zu einer besonders einfachen Bauweise, insbesondere im Hinblick auf die Gestaltung der Führungseinrichtung, die in Form einer einfachen Koppeleinrichtung für eine kombinierte Schwenkbewegung zugehöriger Wandteile ausgebildet sein kann.

An Stelle der zweiteiligen Ausbildung der Trennwand könnte zusätzlich zum zweiten Wandteil zumindest ein weiterer schwenkbarer Wandteil oder eine noch größere Anzahl schwenkbarer Wandteile vorhanden sein, wobei die jeweiligen Wandteile für ihre Mitnahme über betreffende weitere Führungseinrichtungen miteinander zusammenwirken könnten.

In besonders vorteilhafter Weise sind die Wandteile als flache Schildkörper ausgebildet, die bei der Nicht-Gebrauchsstellung unterhalb der in der abgesenkten Gebrauchslage befindlichen, schwenkbaren Armlehne in einer Sitzkonsole nebeneinander liegend aufgenommen sind.

Eine besonders kompakte Bauweise ergibt sich bei Ausführungsbeispielen, bei denen einer der Wandteile aus zwei in geringem Abstand nebeneinander liegenden Schildkörpern gebildet ist, zwischen denen der Schildkörper eines jeweils anderen Wandteiles bei der Nicht-Gebrauchsstellung mit zumindest einem Großteil seiner Schildfläche aufgenommen ist. In der Nicht-Gebrauchsstellung sind hierbei die Wandteile eng aneinanderliegend geschachtelt, so dass sich ein minimaler Raumbedarf ergibt. Wenn die Führungseinrichtung so ausgelegt ist, dass auch in der Gebrauchsstellungein, wenn auch geringfügiger, Eingriff zwischen angrenzenden Wandteilen gegeben ist, dann ist sichergestellt, dass in der Gebrauchsstellung kein Sichtspalt zwischen angrenzenden Wandteilen vorhanden ist.

Bei vorteilhaften Ausführungsbeispielen sind sowohl der mit der Armlehne verbundene erste Wandteil als auch der über die Führungseinrichtung mit diesem zusammenwirkende zweite Wandteil beide um die Schwenkachse der Armlehne schwenkbar gelagert. Bei solchen Ausführungsbeispielen kann die Führungseinrichtung in konstruktiv einfacher Weise durch eine Mitnehmereinrichtung gebildet sein, die am ersten Wandteil einen Mitnahmezapfen und am zweiten Wandteil einen für die Zusammenwirkung mit diesem Zapfen vorgesehen Anschlag aufweist, wobei Mitnahmezapfen und Anschlag in solcher relativer Lagebeziehung zueinander am betreffenden Wandteil angebracht sind, dass der erste Wandteil bei seiner Schwenkbewegung aus der Nicht-Gebrauchsstellung erst dann am Anschlag des zweiten Wandteiles anläuft, wenn der erste Wandteil den Teil des Abschirmbereiches durchlaufen hat, der in der Gebrauchsstellung vom zweiten Wandteil zu überdecken ist, so dass der zweite Wandteil am Ende der Bewegung des ersten Wandteiles in die Position kommt, in der er in Kombination mit dem ersten Wandteil die vollständige Bedeckung des Abschirmbereiches bildet.

Falls es in Anpassung an bauliche Gegebenheiten des Konsolenbereiches günstig ist, kann der zweite Wandteil, der über die Führungseinrichtung mit dem mit der Armlehne auf gemeinsame Achse schwenkbaren ersten Wandteil zusammenwirkt, seinerseits um eine Schwenkachse schwenkbar gelagert sein, die einen Abstand von der Schwenkachse der Armlehne aufweist. Diese Schwenkachse des zweiten Wandteiles kann im Bereich unterhalb des vorderen freien Endes der in der abgesenkten Gebrauchslage befindlichen Armlehne an der Struktur der Sitzkonsole angeordnet sein. Bei solchen Ausführungsbeispielen besteht die Möglichkeit, die Führungseinrichtung zwischen zusammenwirkenden Wandteilen durch eine Schlitz/Stift-Verbindung zu bilden, bei der ein sich quer zu den Schwenkachsen erstreckender, am einen Wandteil befindlicher führungsstift in einen im mitzunehmenden Wandteil ausgebildeten Führungsschlitz eingreift.

Nachstehend ist die Erfindung anhand von in der Zeichnung dargestellten Ausführungsbeispielen im Einzelnen erläutert. Es zeigen:
- Fig. 1 eine stark schematisch vereinfacht und perspektivisch gezeichnete Schrägansicht lediglich der tragenden Struktur eines Ausführungsbeispieles des erfindungsgemäßen Sitzes in Form eines Fluggastsitzes, wobei in einer seitlichen Sitzkonsole eine in sie eingefahrene, in der Nicht-Gebrauchsstellung befindliche Trennwand zu sehen ist;
- Fig. 2 eine gegenüber Fig. 1 vergrößert und teils verkürzt gezeichnete Schnittansicht einer schwenkbaren Armlehne und einer in der Nicht-Gebrauchsstellung befindlichen Trennwand mit einem ersten und einem zweiten Wandteil, die um die Schwenkachse der Armlehne schwenkbar sind;
- Fig. 3 eine schematische Skizze zur Verdeutlichung der Mitnehmerfunktion einer Führungseinrichtung, über die erster Wandteil und zweiter Wandteil des Ausführungsbeispieles miteinander zusammenwirken;
- Fig. 4 eine der Fig. 1 ähnliche schematische Darstellung eines zweiten Ausführungsbeispieles des erfindungsgemäßen Sitzes mit in eine Sitzkonsole eingefahrener, in der Nicht-Gebrauchsstellung befindlicher Trennwand, und
- Fig. 5 bis 7 gegenüber Fig. 4 in größerem Maßstab gezeichnete, perspektivische Teildarstellung des Ausführungsbeispiels von Fig. 4, wobei bei dem Überführen der Trennwand in die Gebrauchsstellung die Betriebszustände mit um 70° hoch geschwenkter Armlehne bzw. um 90° hoch geschwenkter Armlehne bzw. der Zustand des vollständigen Erreichens der Gebrauchsstellung geneigt sind.

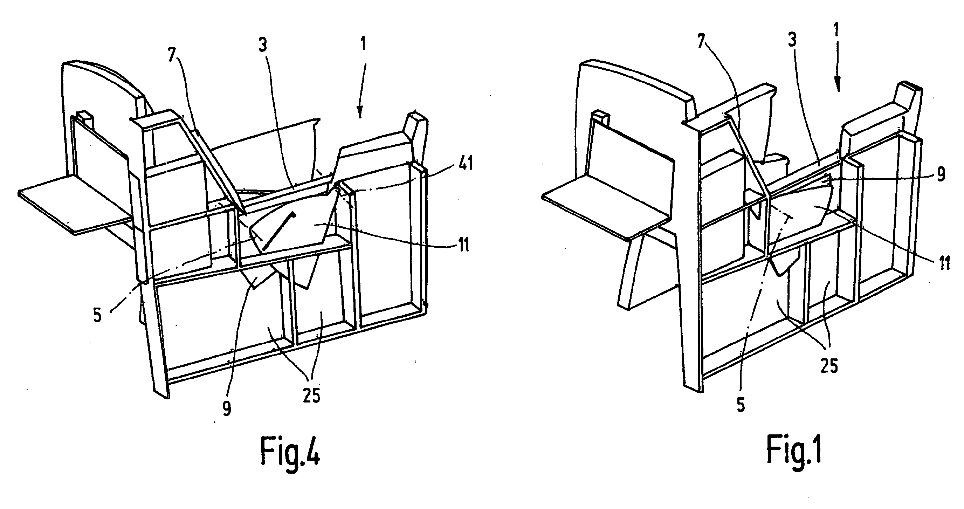

In der vorliegenden Beschreibung ist die Erfindung am Beispiel eines Fluggastsitzes erläutert. Es versteht sich, dass die Erfindung in entsprechender Weise auch bei Sitzen für andere Verkehrsmittel verwirklicht werden kann, beispielsweise Fährschiffen, Schienenfahrzeugen und dergleichen. Fig. 1 zeigt von einem Fluggastsitz, der Teil einer im übrigen nicht gezeigten Sitzreihe bildet, lediglich tragende Strukturelemente ohne Verkleidung, Polsterung oder Zusatzeinrichtungen, wobei eine Mittelkonsole als Ganzes mit 1 bezeichnet ist, die die Abgrenzung zum sich seitlich anschließenden weiteren Sitz (der nicht dargestellt ist), bildet. Eine Armlehne 3, die sich in Fig. 1 in ihrer abgesenkten horizontalen Gebrauchslage befindet, ist an der Struktur der Konsole 1 um eine mit 5 bezeichnete Schwenkachse gelagert, so dass sie aus ihrer gezeigten Gebrauchslage nach oben gegen ein Strukturelement 7 hin geschwenkt werden kann, das, bezogen auf die Flugrichtung, leicht nach hinten geneigt verläuft.

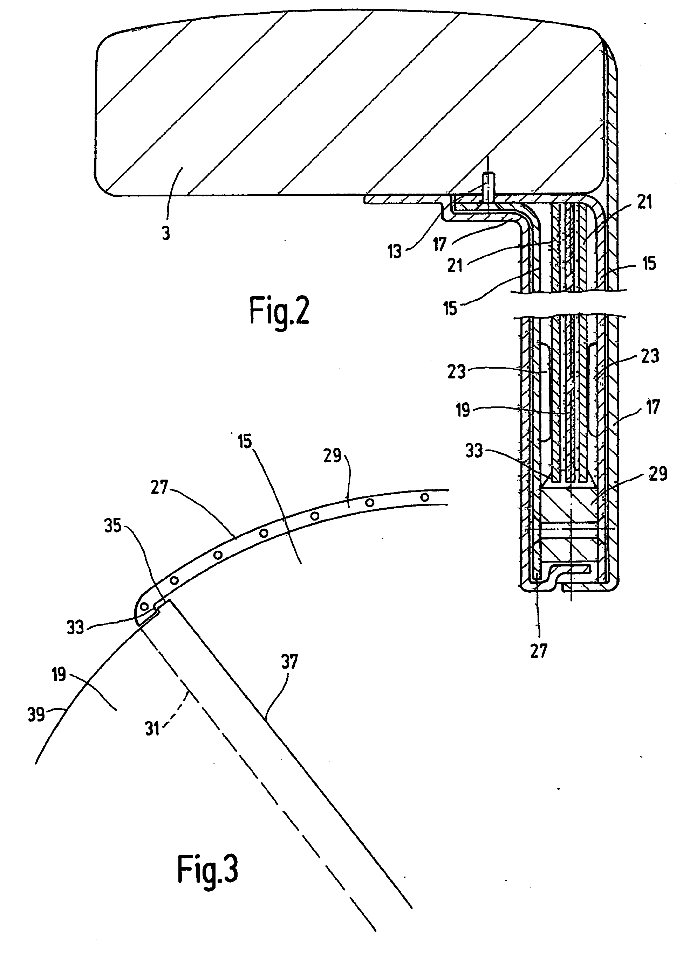

Bei dem Ausführungsbeispiel von Fig. 1, das durch die Fig. 2 und 3 näher verdeutlicht wird, befindet sich unterhalb der Armlehne 3 eine in der Nicht-Gebrauchsstellung befindliche, in die Konsole 1 eingefahrene Trennwand. Diese weist einen ersten Wandteil 9 sowie einen zweiten Wandteil 11 auf, die beide um die Schwenkachse 5 der Armlehne 3 schwenkbar sind, wobei der erste Wandteil 9 mit der Armlehne 3 verbunden und somit unmittelbar zusammen mit dieser schwenkbar ist. Der zweite Wandteil 11 ist auf der Schwenkachse 5 frei drehbar gelagert.

Fig. 2 zeigt, dass der erste Wandteil, der mit der Armlehne 3 mittels Verschraubung 13 verbunden ist, aus zwei in parallelen Ebenen nebeneinander verlaufenden Schildkörpern 15 gebildet ist, bei denen es sich um dünne plattenartige Bauteile aus Kunststoff oder einem leichten metallischen Werkstoff handelt. Die Schildkörper 15, die, wie durch den unterbrochenen Zeichnungsbezirk in Fig. 2 verdeutlicht ist, sehr stark verkürzt dargestellt sind, sind an ihrer Außenseite durch einen Überzug aus einer Verkleidungsfolie 17 kaschiert. Der zweite Wandteil 11 ist im Gegensatz zum ersten Wandteil 9 einteilig, d. h. er weist lediglich einen Schildkörper 19 auf, der, ebenso wie die Schildkörper 15, eine dünne Platte aus Metall oder Kunststoff ist, die ebenfalls durch Verkleidungsfolien 21 außenseitig kaschiert ist.

Der den zweiten Wandteil bildende Schildkörper 19 ist zwischen den Schildkörpern 15 des ersten Wandteiles aufgenommen, wobei zur Bildung einer gepolsterten Führung für die Relativbewegung zwischen erstem und zweitem Wandteil Flauschbänder 23 zwischen den Schildkörpern 15 und der Verkleidungsfolie 21 des Schildkörpers 19 angeordnet sind, wobei die Flauschbänder 23 beim gezeigten Beispiel mit den Schildkörpern 15 verklebt sind.

Die in der Schnittdarstellung gezeigten Bauelemente sind nicht nur gemäß dem in Fig. 2 eingezeichneten Unterbrechungsbereich in der Länge stark verkürzt dargestellt, sondern der Verdeutlichung wegen auch in den Dikkenabmessungen leicht übertrieben dargestellt. Bei der in Fig. 1 dargestellten Nicht-Gebrauchsstellung ist der durch den Schildkörper 19 gebildete zweite Wandteil im wesentlichen vollflächig innerhalb des ersten Wandteiles, d. h. zwischen dessen Schildkörpern 15, aufgenommen. Die Größe des Stauraumes, der innerhalb der Konsole 1 für die Aufnahme der in Nicht-Gebrauchsstellung befindlichen Trennwand benötigt wird, entspricht daher im Wesentlichen lediglich der Größe des durch die Schildkörper 15 gebildeten ersten Wandteiles 9. Somit verbleibt, obwohl die Gesamtgröße des durch die Trennwand zu überdeckenden Abschirmbereiches der kombinierten Flächengröße aus erstem Wandteil 9 und zweitem Wandteil 11 entspricht, innerhalb der Konsole 1 freier Bauraum 25 für die Unterbringung der für moderne Sitzsysteme erforderlichen Zusatzeinrichtungen wie elektrische Ausrüstungen, Steuer- und Servosysteme für Verstellmechanismen und dergleichen.

Wie aus Fig. 2 und 3 zu ersehen ist, sind die Schitdkörper 15, die die Form eines Kreissektors mit zur Schwenkachse 5 kreisbogenförmigem Rand 27 aufweisen, längs dieses Randes 27 durch eine Distanzleiste 29 verbunden, die die Parallelität der Schildkörper 15 sicherstellt. Wie Fig. 3 zeigt, bildet die Distanzleiste 29 in der Nähe des geraden Endrandes 31 der Schildkörper 15 einen radial einwärts leicht vorspringenden Mitnahmezapfen 33. Dieser wirkt mit einer radial nach außen leicht vorspringenden Mitnahmenase 35 zusammen, die sich am kreisbogenförmigen Umfangsrand 39 des ebenfalls kreissektorförmigen Schildkörpers 19 befindet, und zwar im Bereich von dessen Rand 37, welcher bei der Schwenkbewegung in die Gebrauchsstellung den voreilenden Rand bildet.

Bei dieser Lagebeziehung zwischen Mitnahmezapfen 33 und der Mitnahmenase 35 am Schildkörper 19 des zweiten Wandteiles 11 ist eine Führungseinrichtung gebildet, die beim Überführen der Trennwand in die Gebrauchsstellung zunächst die Schildkörper 15 des ersten Wandteiles 9 aus der Konsole 1 heraus bewegt und sodann bei Anlaufen des Zapfens 33 an der Nase 35 den zweiten Wandteil (Schildkörper 19) mitnimmt. So wird erreicht, dass am Ende der Schwenkbewegung der Armlehne 3, und damit des ersten Wandteiles 9, der zweite Wandteil 11 (Schildkörper 19) zusammen mit dem ersten Wandteil 9 die Gesamtbedeckung des Abschirmbereiches bilden. Da der den zweiten Wandteil 11 bildende Schildkörper 19 auf der Schwenkachse 5 frei beweglich ist, kehrt er bei einer Schwenkbewegung der Armlehne 3 aus der der Gebrauchsstellung der Trennwand entsprechenden Stellung in die horizontale Gebrauchslage bei der entsprechenden Schwenkbewegung des ersten Wandteiles 9 (Schildkörper 15) unter Schwerkrafteinfluss selbsttätig in die in die Konsole 1 eingefahrene Schwenkstellung zurück in der er an einem nicht gezeigten Endanschlag anliegt.

Bei dem gezeigten Beispiel, siehe Fig. 2 und 3, ist der erste Wandteil 9 mit zwei Schildkörpern 15 zweiteilig, während der zweite Wandteil 11 mit nur einem Schildkörper 19 einteilig ist und zwischen die Schildkörper 15 des ersten Wandteiles 9 eingreift. Alternativ könnte die Anordnung so getroffen sein, dass der erste Wandteil 9 einteilig ist und zwischen zwei Schildkörper des zweiteilig ausgebildeten zweiten Wandteiles 11 eingreift.

Fig. 4 bis 7 zeigen ein zweites Ausführungsbeispiel mit einer ebenfalls aus einem ersten Wandteil 9 und einem zweiten Wandteil 11 gebildeten Trennwand. Ein wesentlicher Unterschied gegenüber dem erstbeschriebenen Ausführungsbeispiel besteht darin, dass lediglich der erste Wandteil 9 um die Schwenkachse 5 der Armlehne 3 schwenkbar gelagert ist, während der zweite Wandteil 11 um eine zweite Schwenkachse 41 schwenkbar ist. Diese befindet sich beim gezeigten Beispiel unterhalb des vorderen Endes der Armlehne 3 an der Struktur der Konsole 1. Der erste Wandteil 9 ist wiederum mit der Armlehne 3 verbunden und daher bei der Lageeinstellung der Armlehne 3 durch diese schwenkbar.

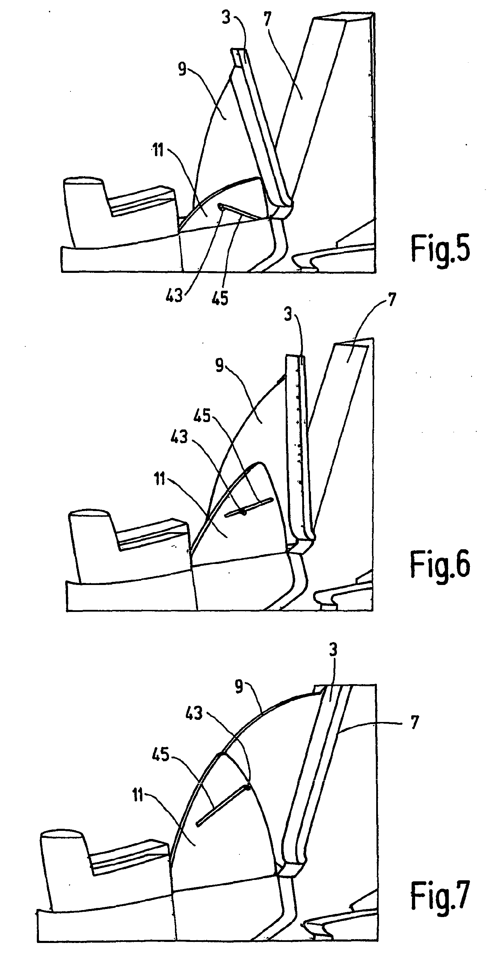

Ein weiterer Unterschied gegenüber dem erstbeschriebenen Beispiel besteht in der Ausbildung der Führungseinrichtung, die den zweiten Wandteil 11 bei der Bewegung des ersten Wandteiles 9 mitnimmt. Wie insbesondere aus Fig. 5 bis 7 ersichtlich ist, ist die Führungseinrichtung durch eine Stift/Schlitz-Verbindung gebildet, bei der ein am ersten Wandteil 9 seitlich vorstehender Mitnehmerstift 43 in einen Führungsschlitz 45 im Wandteil 11 eingreift.

Wiederum, wie beim erst beschriebenen Ausführungsbeispiel, sind die relativen Lagebeziehungen von Stift 43 und Schlitz 45 so gewählt, dass beim Überführen aus der Nicht-Gebrauchsstellung in die Gebrauchsstellung der erste Wandteil den zweiten Wandteil so mitnimmt, dass bei vollständig nach oben geschwenkter Armlehne 3, d. h. bei vollständig aus der Konsole 1 ausgefahrenem ersten Wandteil 9, der zweite Wandteil 11 soweit mitgenommen wird, indem er um seine separate Schwenkachse 41 geschwenkt wird, dass er zusammen mit dem ersten Wandteil 9 die vollständige Bedekkung des Abschirmbereiches bildet.

Die Fig. 5 bis 7 zeigen die Bewegungsphasen, wobei fig. 5 die Anfangsphase der Mitnahme bei um 70° nach oben geschwenkter Armlehne 3, die Fig. 6 den Zustand bei 90° hoch geschwenkter Armlehne 3 und Fig. 7 den Endzustand bei der Gebrauchsstellung zeigt, wobei die Wandteile 9 und 11 in Kombination den gesamten Abschirmbereich überdecken und die Armlehne 3 an das Strukturelement 7 angeschwenkt ist.

Wie beim erstbeschriebenen Ausführungsbeispiel kann einer der Wandteile 9, 11 zweiteilig mit parallelen Schildkörpern ausgeführt sein, zwischen die der jeweils andere Wandteil, bestehend aus nur einem Schildkörper eingreift. Vorzugsweise erstreckt sich hierbei der Mitnehmerstift 43 zwischen den Schildkörpern des zweiteiligen Wandteiles, wobei der Führungsschlitz 45 in dem zwischen diese Schildkörper eingreifenden, einteiligen Wandteil ausgebildet ist.

## Patentansprüche

1. Passagiersitz, insbesondere Fluggastsitz, mit Sitzkomponenten wie Sitzteil, Rückenlehne und Armlehne (3), von denen zumindest eine Komponente zur Lageeinstellung relativ zu anderen Sitzkomponenten bewegbar angeordnet ist, und mit einer Trennwand (9, 11), die zwischen einer Gebrauchsstellung, in der sie sich in einem seitlichen Abschirmbereich des Sitzes erstreckt, und einer Nicht-Gebrauchsstellung überführbar ist, in der sie den Abschirmbereich frei gibt, wobei die Trennwand aus mehreren, sich in der Gebrauchsstellung im Abschirmbereich erstreckenden Wandteilen (9, 11) besteht, die über eine Führungseinrichtung (33, 35; 43, 45) derart miteinander zusammenwirken, dass die Bewegung eines Wandteiles (9) beim Überführen zwischen Nicht-Gebrauchsstellung und Gebrauchsstellung einen anderen Wandteil (11) mitnimmt, **dadurch gekennzeichnet, dass** ein erster Wandteil (9) schwenkbar gelagert ist, durch eine Schwenkbewegung einer mit ihm verbundenen, lageeinstellbaren Armlehne (3) in die Gebrauchsstellung schwenkbar ist und über die Führungseinrichtung (33, 35; 43, 45) mit zumindest einem zweiten schwenkbaren Wandteil (11) zusammenwirkt.

2. Passagiersitz nach Anspruch 1, **dadurch gekennzeichnet, dass** zusätzlich zum zweiten Wandteil (11) zumindest ein weiterer schwenkbarer Wandteil vorhanden ist und die jeweiligen Wandteile für ihre Mitnahme bei Überführen zwischen Nicht-Gebrauchsstellung und Gebrauchsstellung über betreffende weitere Führungseinrichtungen miteinander zusammenwirken.

3. Passagiersitz nach einem der Ansprüche 1 oder 2, **dadurch gekennzeichnet, dass** die Wandteile als flache Schildkörper (15, 19) ausgebildet sind, die bei der Nicht-Gebrauchsstellung unterhalb der in der abgesenkten Gebrauchslage befindlichen, schwenkbaren Armlehne (3) in einer Sitzkonsole (1) nebeneinander liegend aufgenommen sind.

4. Passagiersitz nach Anspruch 3, **dadurch gekennzeichnet, dass** die Führungseinrichtung (33, 35; 43, 45) oder Führungseinrichtungen bei der den ersten Wandteil (9) bewegenden Schwenkbewegung der Armlehne (3) aus der abgesenkten Gebrauchslage den jeweils weiteren Wandteil (11) in eine eine Teilbedeckung des Abschirmbereichs bildende Position mitnimmt bzw. mitnehmen, bei der die Wandteile (9, 11) zur Bildung einer im Wesentlichen ununterbrochenen Abschirmfläche mit zugeordneten Randbereichen (31 bzw. 37) einander benachbart sind.

5. Passagiersitz nach Anspruch 4, **dadurch gekennzeichnet, dass** einer (9) der Wandteile (9, 11) aus zwei in geringem Abstand nebeneinander liegenden Schildkörpern (15) gebildet ist, zwischen denen der Schildkörper (19) eines jeweils anderen Wandteiles (11) bei der Nicht-Gebrauchsstellung mit zumindest einem Großteil seiner Schildfläche aufgenommen ist.

6. Passagiersitz nach Anspruch 4 oder 5, **dadurch gekennzeichnet, dass** der mit der Armlehne (3) verbundene erste Wandteil (9) und der über die Führungseinrichtung (33, 35) mit diesem zusammenwirkende zweite Wandteil (11) beide um die Schwenkachse (5) der Armlehne (3) schwenkbar gelagert sind.

7. Passagiersitz nach Anspruch 6, **dadurch gekennzeichnet, dass** die Führungseinrichtung (33, 35) einen am ersten Wandteil (9) angebrachten Mitnahmezapfen (33) und am zweiten Wandteil (11) einen für die Zusammenwirkung mit diesem Zapfen (33) vorgesehenen Anschlag (35) aufweist und dass Mitnahmezapfen (33) und Anschlag (35) in solcher relativer Lagebeziehung zueinander am betreffenden Wandteil (9 bzw. 11) angebracht sind, dass der erste Wandteil (9) den zweiten Wandteil (11) beim Überführen in die Gebrauchsstellung in eine Position der Teilbedeckung mitnimmt, die in Kombination mit der Teilbedeckung durch den ersten Wandteil (9) zur vollständigen Bedeckung des Abschirmbereiches führt.

8. Passagiersitz nach einem der Ansprüche 3 bis 6, **dadurch gekennzeichnet, dass** der über die Führungseinrichtung (43, 45) mit dem ersten Wandteil (9), der um die Schwenkachse (5) der Armlehne (3) schwenkbar ist, zusammenwirkende zweite Wandteil (11) um eine im Abstand von der Schwenkachse (5) der Armlehne (3) befindliche zweite Schwenkachse (41) schwenkbar gelagert ist.

9. Passagiersitz nach Anspruch 8, **dadurch gekennzeichnet, dass** die Schwenkachse (41) des zweiten Wandteiles (11) im Bereich unterhalb des vorderen freien Endes der in der abgesenkten Gebrauchslage befindlichen Armlehne (3) an der Struktur der Sitzkonsole (1) angeordnet ist.

10. Passagiersitz nach Anspruch 9, **dadurch gekennzeichnet, dass** die Führungseinrichtung zwischen zusammenwirkenden Wandteilen (9, 11) durch eine Schlitz/Stift-Verbindung (43, 45) gebildet ist, bei der ein sich quer zu den Schwenkachsen (5, 41) erstreckender, am einen Wandteil (9) befindlicher Führungsstift (43) in einen im mitzunehmenden Wandteil (11) ausgebildeten Führungsschlitz (45) eingreift.

## Claims

1. Passenger seat, especially airline passenger seat, having seat components such as a seat part, backrest and armrest (3), at least one component of which is arranged so as to be movable for positional adjustment relative to other seat components, and having a partition (9, 11) which can be transferred between a position of use, in which it extends in a lateral screening region of the seat, and an out-of-use position, in which it clears the screening region, wherein the partition is composed of a plurality of partition parts (9, 11) which extend in the screening region in the position of use and which interact with one another via a guiding device (33, 35; 43, 45) in such a way that the movement of a partition part (9) during the transfer between the out-of-use position and the position of use entrains another partition part (11), **characterized in that** a first partition part (9) is pivotably mounted, can be pivoted into the position of use by means of a pivoting movement of an armrest (3) which is connected thereto and the position of which can be adjusted, and interacts via the guiding device (33, 35; 43, 45) with at least one second pivotable partition part (11).

2. Passenger seat according to Claim 1, **characterized in that**, in addition to the second partition part (11), at least one further pivotable partition part is present and the respective partition parts interact with one another for entrainment thereof during the transfer between the out-of-use position and the position of use by means of further respective guiding devices.

3. Passenger seat according to either of Claims 1 and 2, **characterized in that** the partition parts are formed as flat shield bodies (15, 19) which, in the out-of-use position, are accommodated lying one next to the other in a seat bracket (1), underneath the pivotable armrest (3) which is in the lowered position of use.

4. Passenger seat according to Claim 3, **characterized in that**, during the pivoting movement of the armrest (3) out of the lowered position of use, said movement moving the first partition part (9), the guiding device (33, 35; 43, 45) or guiding devices entrains/entrain the further respective partition part (11) into a position which brings about partial coverage of the screening region and in which the partition parts (9, 11) are adjacent to one another in order to form an essentially uninterrupted screening surface with assigned edge regions (31 and 37, respectively).

5. Passenger seat according to Claim 4, **characterized in that** one (9) of the partition parts (9, 11) is formed from two shield bodies (15) which lie one next to the other at a small clearance and between which the shield body (19) of another respective partition part (11) is accommodated with at least a large part of its shield face in the out-of-use position.

6. Passenger seat according to Claim 4 or 5, **characterized in that** the first partition part (9) which is connected to the armrest (3) and the second partition part (11) which interacts therewith via the guiding device (33, 35) are both mounted so as to be pivotable about the pivoting axis (5) of the armrest (3).

7. Passenger seat according to Claim 6, **characterized in that** the guiding device (33, 35) has an entrainment stud (33) which is attached to the first partition part (9), and a stop (35) which is provided on the second partition part (11), for the purpose of interaction with said stud (33), and **in that** the entrainment stud (33) and the stop (35) are provided in such a relative positional relationship to one another on the respective partition part (9 or 11, respectively) that during the transfer into the position of use, the first partition part (9) entrains the second partition part (11) into a position of partial coverage which, in combination with the partial coverage by the first partition part (9), leads to complete coverage of the screening region.

8. Passenger seat according to one of Claims 3 to 6, **characterized in that** the second partition part (11) which interacts via the guiding device (43, 45) with the first partition part (9), which can pivot about the pivoting axis (5) of the armrest (3), is mounted so as to be pivotable about a second pivoting axis (41) which is at a distance from the pivoting axis (5) of the armrest (3).

9. Passenger seat according to Claim 8, **characterized in that** the pivoting axis (41) of the second partition part (11) is arranged in the region underneath the front free end of the armrest (3) in the lowered position of use, on the structure of the seat bracket (1).

10. Passenger seat according to Claim 9, **characterized in that** the guiding device is formed between interacting partition parts (9, 11), by a slot/pin connection (43, 45) in which a guide pin (43), which extends transversely with respect to the pivoting axes (5, 41) and is located on a partition part (9), engages in a guide slot (45) which is formed in the partition part (11) which is to be entrained.

## Revendications

1. Siège de passager, notamment siège de passager aérien, avec des éléments de siège tels que la partie d'assise, le dossier et l'accoudoir (3), parmi lesquels au moins un élément est disposé de façon mobile par rapport aux autres éléments de siège pour le réglage de la position, et avec une paroi de séparation (9, 11) pouvant être déplacée entre une position d'utilisation dans laquelle elle s'étend dans une zone de protection latérale du siège et une position de non-utilisation dans laquelle elle libère la zone de protection, la paroi de séparation se composant de plusieurs parties de paroi (9, 11) s'étendant en position d'utilisation dans la zone de protection et interagissant de telle sorte les unes avec les autres par l'intermédiaire d'un dispositif de guidage (33, 35 ; 43, 45) que le mouvement d'une partie de paroi (9) engrène, lors du passage entre la position de non-utilisation et la position d'utilisation, une autre partie de paroi (11), **caractérisé en ce qu'**une première partie de paroi (9) est disposée de façon pivotante, qu'un accoudoir (3) relié à lui et réglable en position peut pivoter dans la position d'utilisation par le biais d'un mouvement de pivotement et interagit avec au moins une deuxième partie de paroi (11) pivotant par l'intermédiaire du dispositif de guidage (33, 35 ; 43, 45).

2. Siège de passager selon la revendication 1, **caractérisé en ce qu'**en sus de la deuxième partie de paroi (11), on a au moins une autre partie de paroi pivotante et que les parties de paroi respectives interagissent pour leur engrènement lors du passage entre la position de non-utilisation et la position d'utilisation par l'intermédiaire des autres dispositifs de guidage concernés.

3. Siège de passager selon l'une quelconque des revendications 1 ou 2, **caractérisé en ce que** les parties de paroi prennent la forme de corps de panneau (15, 19) plats logés côte à côte dans une console de siège (1) en position allongée, dans la position de non-utilisation située en dessous de l'accoudoir (3) pivotant se trouvant dans la position d'utilisation rabaissée.

4. Siège de passager selon la revendication 3, **caractérisé en ce que** le dispositif de guidage (33, 35 ; 43, 45) ou les dispositifs de guidage engrène ou engrènent, lors du mouvement de pivotement de l'accoudoir (3) déplaçant la première partie de paroi (9) hors de la position d'utilisation rabaissée, la respectivement autre partie de paroi (11) dans une position formant un recouvrement de la partie de la zone de protection dans laquelle les parties de paroi (9, 11) sont placées côte à côte pour former une surface de protection pour l'essentiel ininterrompue avec des zones de bordure (31 et/ou 37) associées.

5. Siège de passager selon la revendication 4, **caractérisé en ce qu'**une (9) des parties de paroi (9, 11) est constituée de deux corps de panneau (15) reposant côte à côte à faible distance l'un de l'autre, entre lesquels le corps de panneau (19) d'une respectivement autre partie de paroi (11) est logée dans la position de non-utilisation sur au moins une grande partie de sa surface de panneau.

6. Siège de passager selon la revendication 4 ou 5, **caractérisé en ce que** la première partie de paroi (9) reliée à l'accoudoir (3) et la deuxième partie de paroi (11) interagissant avec elle via le dispositif de guidage (33, 35) sont toutes deux disposées de façon à pouvoir pivoter autour de l'axe de pivotement (5) de l'accoudoir (3).

7. Siège de passager selon la revendication 6, **caractérisé en ce que** le dispositif de guidage (33, 35) comporte un tenon d'engrènement (33) disposé au niveau de la première partie de paroi (9) et, au niveau de la deuxième partie de paroi (11), une butée (35) prévue pour l'interaction avec ce tenon (33) et que le tenon d'engrènement (33) et la butée (35) sont disposés dans une relation de position telle au niveau de la partie de paroi (9 et/ou 11) concernée que la première partie de paroi (9) engrène la deuxième partie de paroi (11) dans une position de recouvrement de la partie lors de l'amenée dans la position d'utilisation, ladite position de recouvrement conduisant, en combinaison avec le recouvrement de la partie, au recouvrement complet de la zone de protection de la première partie de paroi (9).

8. Siège de passager selon l'une quelconque des revendications 3 à 6, **caractérisé en ce que** la deuxième partie de paroi (11) interagissant avec la première partie de paroi (9) pouvant pivoter autour de l'axe de pivotement (5) de l'accoudoir (3) par l'intermédiaire du dispositif de guidage (43, 45) est disposée de façon pivotante autour d'un deuxième axe de pivotement (41) se trouvant à une certaine distance de l'axe de pivotement (5) de l'accoudoir (3).

9. Siège de passager selon la revendication 8, **caractérisé en ce que** l'axe de pivotement (41) de la deuxième partie de paroi (11) est disposé au niveau de la structure de la console de siège (1) dans la zone située en dessous de l'extrémité avant libre de l'accoudoir (3) se trouvant dans la position d'utilisation rabaissée.

10. Siège de passager selon la revendication 9, **caractérisé en ce que** le dispositif de guidage est formé par une association fente/pointe (43, 45) positionnée entre les parties de paroi (9, 11) en interaction, une pointe de guidage (43) s'étendant transversalement par rapport aux axes de pivotement (5, 41) et se positionnant au niveau d'une partie de paroi (9) s'engrenant dans une fente de guidage (45) réalisée dans la partie de paroi (11) à engrener.
